(19) **Europäisches Patentamt**
**European Patent Office**
**Office européen des brevets**

(11) **EP 4 405 642 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **22765548.7**

(22) Anmeldetag: **17.08.2022**

(51) Internationale Patentklassifikation (IPC):
***G01F 1/66*** *(2022.01)*

(52) Gemeinsame Patentklassifikation (CPC):
**G01F 1/66**

(86) Internationale Anmeldenummer:
**PCT/EP2022/072978**

(87) Internationale Veröffentlichungsnummer:
**WO 2023/041277 (23.03.2023 Gazette 2023/12)**

(54) **VERFAHREN ZUM BETREIBEN EINES ULTRASCHALL-MESSGERÄTS UND ULTRASCHALL-MESSGERÄT**

METHOD OF OPERATING AN ULTRASONIC MEASUREMENT DEVICE AND MEASUREMENT DEVICE

PROCÉDÉ DE FONCTIONNEMENT D'UN DISPOSITIF DE MESURE À ULTRASONS ET DISPOSITIF DE MESURE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2021 DE 102021124275**

(43) Veröffentlichungstag der Anmeldung:
**31.07.2024 Patentblatt 2024/31**

(73) Patentinhaber: **Endress+Hauser Flowtec AG**
**4153 Reinach (CH)**

(72) Erfinder:
• **BERBERIG, Oliver**
**79639 Grenzach-Wyhlen (DE)**
• **BERGER, Andreas**
**4228 Erschwil (CH)**
• **GRUNWALD, Sascha**
**79585 Steinen (DE)**
• **BERINGER, Klaus**
**96253 Untersiemau (DE)**
• **BRAUN, Rudolf**
**96482 Ahorn (DE)**
• **NATTERER, Stefan**
**96450 Coburg (DE)**
• **MÜNCH, Michael**
**96049 Bamberg (DE)**
• **RAUTENBERG, Jens**
**59590 Geseke (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
EP-A1- 3 608 639     DE-A1- 102018 109 807
DE-A1- 102018 133 066     GB-A- 2 479 115
US-A1- 2006 052 963     US-A1- 2021 102 825

**Beschreibung**

Die Anmeldung betrifft ein Verfahren zum Betreiben eines Ultraschall-Messgeräts zum Erfassen einer Messgröße eines Fluids wie beispielsweise ein Durchfluss oder eine Dämpfungseigenschaft. Die Anmeldung betrifft des Weiteren ein Ultraschall-Messgerät zur Umsetzung des Verfahrens.

Ultraschall-Messgeräte wie beispielsweise in der DE102018133066A1 sind Stand der Technik. Eine genaue Bestimmung von Messgrößen kann eine genaue Kenntnis von Medieneigenschaften erfordern. Medieneigenschaften können sich jedoch im Laufe der Zeit beispielsweise dynamisch in Prozessen ändern, so dass bei Messgeräten gemäß dem Stand der Technik hin und wieder oder in regelmäßigen Abständen eine Überprüfung nötig sein kann.

Die US2006/052963A1 lehrt einen Ultraschall-Sensor mit mindestens zwei Signalpfaden unterschiedlicher Länge, der dazu geeignet ist, eine intrinsische Größe (z.B. Schallgeschwindigkeit, Dämpfungskoeffizient) und eine Durchflussgeschwindigkeit eines fließenden Mediums anhand von zwei Messignalen zu ermitteln. Vernachlässigt wird dabei aber der Übergang von Messrohr zum Medium.

Aufgabe der Erfindung ist es daher, ein Verfahren zum Betreiben eines Ultraschall-Messgeräts und ein solches Ultraschall-Messgerät vorzuschlagen, bei welchen eine Medieneigenschaft überprüfbar ist.

Die Aufgabe wird gelöst durch ein Verfahren gemäße dem unabhängigen Anspruch 1 sowie durch ein Ultraschall-Messgerät gemäß dem unabhängigen Anspruch 9.

Bei einem erfindungsgemäßen Verfahren zum Betreiben eines Ultraschall-Messgeräts umfasst das Ultraschall-Messgerät

eine Anordnung von Ultraschallwandlern zum Aussenden und Empfangen von Ultraschallsignalen entlang mindestens zweier Signalpfade durch ein Fluid,

wobei die Anordnung durch eine Haltevorrichtung mit zumindest einer Wandung gehalten wird, wobei die Signalpfade abschnittsweise durch mindestens eine der zumindest einen Wandung verlaufen, wobei Signalpfadabschnitte mindestens zweier Signalpfade im Fluid unterschiedlich lang sind,

wobei eine elektronische Mess-/Betriebsschaltung des Ultraschall-Messgeräts in einem ersten Verfahrensschritt Intensitäten von Ultraschallsignalen entlang von Signalpfaden mit unterschiedlich langen Signalpfadabschnitten im Fluid vergleicht und in einem zweiten Verfahrensschritt daraus eine Dämpfungseigenschaft des Fluids und eine akustische Koppeleigenschaft zwischen Wandung und Fluid bestimmt.

Auf diese Weise können während des Betriebs des Ultraschall-Messgeräts auf besonders einfache und robuste Weise Medieneigenschaften bestimmt werden.

In einer Ausgestaltung sind unterschiedliche Längen von Signalpfaden durch unterschiedliche Abstände jeweils zweier einen Signalpfad definierenden Ultraschallwandler eingerichtet.

Beispielsweise kann ein Messrohr so ausgestaltet sein, dass unterschiedliche Signalpfade durch das Fluid unterschiedlich lang sind.

In einer Ausgestaltung werden unterschiedliche Längen von Signalpfaden durch Anregung unterschiedlicher Moden in einer Lambwellen-Vorrichtung eingerichtet.

Unterschiedliche Moden von Lambwellen weisen unterschiedliche Phasengeschwindigkeiten und somit unterschiedliche Abstrahlwinkel auf. Daher kann durch Auswahl bestimmter Moden die Länge eines Signalpfadabschnitts im Fluid eingestellt werden.

In einer Ausgestaltung ist die Haltevorrichtung ein Messrohr, welches Messrohr ein durch eine Rohrleitung strömendes Fluid führt, wobei die Ultraschallwandler auf einer Außenfläche des Messrohrs angeordnet sind,

oder wobei die Anordnung mit der Haltevorrichtung in ein beispielsweise in einem Behältnis befindliches Fluid getaucht wird.

Ultraschallwandler auf einer Außenfläche eines Messrohrs können dabei beispielsweise einem klassischen Clamp-On-Ultraschall-Messgerät entsprechen oder auch einem Lambwellen-Ultraschall-Messgerät.

In einer Ausgestaltung erzeugen die Ultraschallwandler bei Aussenden eines Ultraschallsignals Ultraschall-Lambwellen in einer dazu vorgesehenen Lambwellen-Vorrichtung,

wobei die Lambwellen-Vorrichtung die Messrohrwandung oder eine Lambwellenplatte der Haltevorrichtung ist.

In einer Ausgestaltung weist die Anordnung einen längsten Signalpfad LS und einen kürzesten Signalpfad KS aufweist, wobei der längste Signalpfad und der kürzeste Signalpfad eine Signalpfadlängendifferenz SD aufweisen,

wobei ein erster Schätzwert S1 für einen Schalldämpfungskoeffizienten des Fluids sowie ein zweiter Schätzwert S2 für eine Wellenlänge des Ultraschalls im Fluids herangezogen wird, um die Signalpfadlängendifferenz einzurichten,

wobei der längste Signalpfad um wenigstens eine Anzahl A zweiter Schätzwerte größer ist als der kürzeste Signalpfad,

wobei Folgendes gilt:

$$A \geq -\ln(1-0.1)/(S1*S2),$$

und insbesondere A ≥ -ln(1-0.3)/(S1*S2)

mit ln als natürlichem Logarithmus.

Auf diese Weise kann ein ausreichend großer Unterschied von Längen der Signalpfadabschnitte im Fluid und somit eine ausreichende Messgenauigkeit der Dämpfungseigenschaft und der akustischen Koppeleigenschaft sichergestellt werden.

In einer Ausgestaltung wird zur Bestimmung der Dämpfungseigenschaft und der akustischen Koppeleigenschaft ein erster, quadratischer Zusammenhang zwischen Frequenz und Dämpfung im Fluid sowie ein zweiter, exponentieller Zusammenhang zwischen Signalpfadlänge und Dämpfung im Fluid angenommen.

In einer Ausgestaltung durchlaufen die Signalpfade das Fluid mit höchstens zwei Reflexionen, und insbesondere höchstens einer Reflexion.

Auf diese Weise kann eine störende Wechselwirkung von Ultraschallsignalen und Ultraschall in der Wandung vermieden werden.

Ein erfindungsgemäßes Ultraschall-Messgerät eingerichtet zur Umsetzung des erfindungsgemäßen Verfahrens umfasst:

eine Anordnung von Ultraschallwandlern zum Aussenden und Empfangen von Ultraschallsignalen entlang mindestens zweier Signalpfade durch ein Fluid,

wobei die Anordnung durch eine Haltevorrichtung mit zumindest einer Wandung gehalten ist, wobei die Signalpfade abschnittsweise durch mindestens eine der zumindest einen Wandung verlaufen, wobei Signalpfadabschnitte mindestens zweier Signalpfade im Fluid unterschiedlich lang sind,

wobei eine elektronische Mess-/Betriebsschaltung des Ultraschall-Messgeräts dazu eingerichtet ist, in einem ersten Verfahrensschritt Intensitäten von Ultraschallsignalen entlang von Signalpfaden mit unterschiedlich langen Signalpfadabschnitten im Fluid zu vergleichen und in einem zweiten Verfahrensschritt daraus eine Dämpfungseigenschaft des Fluids und eine akustische Koppeleigenschaft zwischen Wandung und Fluid zu bestimmen.

Im Folgenden wird die Erfindung anhand von Ausführungsbeispielen dargestellt.

Fig. 1 skizziert den Aufbau eines beispielhaften Ultraschall-Messgeräts mit einem Messrohr;

Fig. 2 skizziert ein beispielhaftes tauchbares Ultraschall-Messgerät;

Fig. 3 zeigt beispielhafte erfindungsgemäße Anordnungen von Ultraschallwandlern an einer Haltevorrichtung jeweils in einer Frontansicht;

Fig. 4 zeigt eine weitere beispielhafte erfindungsgemäße Anordnung von Ultraschallwandlern an einer Haltevorrichtung.

Fig. 5 skizziert den Ablauf eines beispielhaften erfindungsgemäßen Verfahrens.

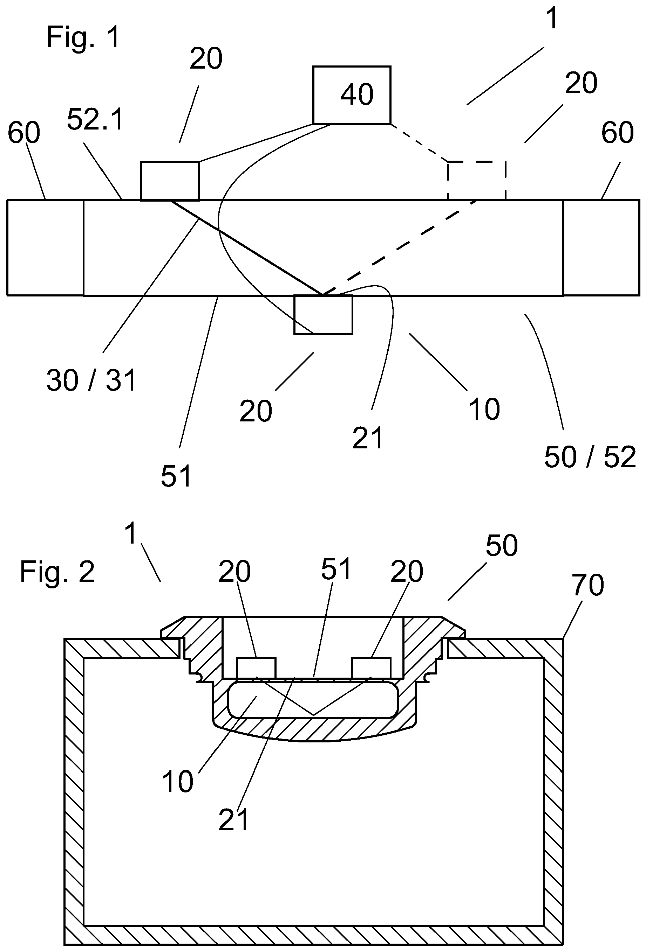

Fig. 1 skizziert den Aufbau eines beispielhaften Ultraschall-Messgeräts 1 mit einer Anordnung 10 von Ultraschallwandlern 20, welche auf einer Außenfläche 52.1 eines in eine Rohrleitung 60 integrierten Messrohrs 52 angeordnet sind. Das Messrohr wirkt hierbei als eine Haltevorrichtung 50 für die Ultraschallwandler 20. Ein Signalpfad 30 zwischen zwei Ultraschallwandlern 20 kann ein Ein-Traversenpfad ohne Reflexion oder wie gestrichelt dargestellt ein Mehr-Traversenpfad mit zumindest einer Reflexion sein. Signalpfade weisen im Fluid jeweils einen Signalpfadabschnitt 31 mit jeweils einer Länge auf.

Die Ultraschallwandler einer Anordnung werden von einer elektronischen Mess-/Betriebsschaltung 40 betrieben, welche des Weiteren dazu eingerichtet ist, Messsignale der Ultraschallwandler zu erfassen und Messwerte von einer Messgröße bereitzustellen.

Die Ultraschallwandler können beispielsweise Clamp-On-Ultraschallwandler oder Lambwellen-Ultraschallwandler sein. Im Falle eines Lambwellen-Ultraschallwandlers weist das Ultraschall-Messgerät eine Lambwellen-Vorrichtung 21 auf, welche dazu eingerichtet ist, Lambwellen zu erzeugen bzw. auszubilden und zu führen. Die Lambwellen-Vorrichtung kann dabei durch eine Wandung 51 des Messrohrs gegeben sein. Das Ultraschall-Messgerät kann beispielsweise ein Laufzeit- bzw. Laufzeitdifferenzen-Durchflussmessgerät sein. Das Ultraschall-Messgerät kann auch dazu eingerichtet sein, eine Dämpfung eines Fluids zu bestimmen.

Fig. 2 skizziert ein beispielhaftes Ultraschall-Messgerät 1, welches in ein Fluid eines Behältnisses 70 getaucht ist. Entsprechend der in Fig. 1 gezeigten Ausführung weist das Ultraschall-Messgerät eine Anordnung 10 von Ultraschallwandlern 20 auf, welche an einer Haltevorrichtung 50 mit einer Wandung 51 angeordnet sind. Wie in Fig. 1 dargestellt kann ein Signalpfad 30 zwischen zwei Ultraschallwandlern 20 ein Ein-Traversenpfad ohne Reflexion oder ein Mehr-Traversenpfad mit zumindest einer Reflexion sein. Signalpfade weisen im Fluid einen Signalpfadabschnitt 31 mit einer Länge auf. Die Ultraschallwandler einer Anordnung werden von einer elektronischen Mess-/Betriebsschaltung 40 (hier der Übersichtlichkeit wegen nicht gezeigt) betrieben, welche des Weiteren dazu eingerichtet ist, Messsignale der Ultraschallwandler zu erfassen und Messwerte von einer Messgröße bereitzustellen. Die Ultraschallwandler können beispielsweise Clamp-On-Ultraschallwandler oder Lambwellen-Ultraschallwandler sein. Im Falle eines Lambwellen-Ultraschallwandlers weist das Ultraschall-Messgerät eine Lambwellen-Vorrichtung 21 auf, welche dazu eingerichtet ist, Lambwellen zu erzeugen bzw.

Lambwellen auszubilden und zu führen. Wie hier gezeigt, kann die Anordnung in einer Öffnung eines Behältnisses eingesetzt sein. Eine erfindungsgemäße Anordnung kann auch bei freistehenden Fluiden verwendet werden.

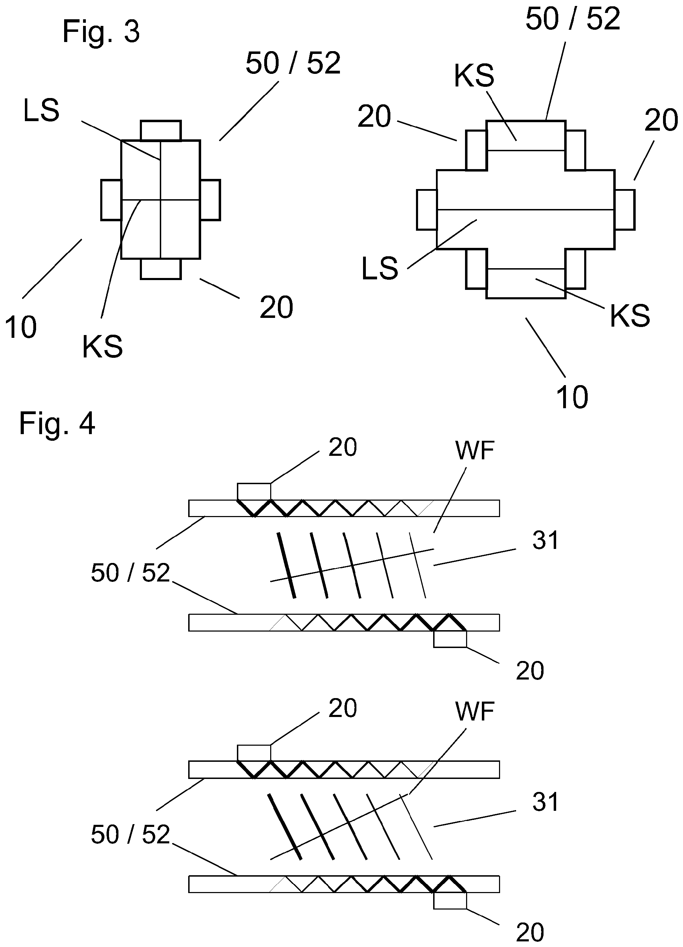

Fig. 3 zeigt zwei beispielhafte erfindungsgemäße Anordnungen 10 von Ultraschallwandlern 20 jeweils in einer Frontansicht, mit welcher Anordnung das erfindungsgemäße Verfahren umsetzbar ist. Erfindungsgemäß durchlaufen Ultraschallsignale das Fluid entlang verschiedener Signalpfade, wobei Längen von Signalpfadabschnitten im Fluid von zumindest zwei Signalpfaden unterschiedlich sind. Dies kann durch eine entsprechende Ausgestaltung der Haltevorrichtung 50 bzw. des Messrohrs 52 erreicht werden. Wie in der linken Skizze zu sehen, kann die Haltevorrichtung beispielsweise eine rechteckige Form aufweisen, so dass zwei zusammengehörige Ultraschallwandler unterschiedliche Abstände zueinander aufweisen. Es können wie in der rechten Skizze dargestellt auch andere Formen verwendet werden. Es können auch mehr als zwei Signalpfade eingerichtet werden, wobei wie hier gezeigt beispielsweise mehrere Signalpfade im Fluid gleichlange Signalpfadabschnitte aufweisen können. Erfindungsgemäß jedoch weisen zumindest zwei Signalpfade 30 im Fluid unterschiedliche Signalpfadlängen auf, so dass ein kürzester Signalpfadabschnitt KS im Fluid und ein längster Signalpfadabschnitt KL im Medium eingerichtet ist. Signalpfade weisen auch Abschnitte in der Haltevorrichtung, bei Clamp-On-Ultraschallwandlern auch in einem Koppelkörper auf. Relevant für diese Erfindung sind jedoch Signalpfadabschnitte im Fluid. Die Ultraschallwandler können beispielsweise Clamp-On-Ultraschallwandler oder Lambwellen-Ultraschallwandler sein.

Fig. 4 zeigt eine weitere beispielhafte erfindungsgemäße Anordnung in einer Seitenansicht, wobei mittels zweier Ultraschallwandler 20, welche dazu eingerichtet sind, in einer Wandung 51 der Haltevorrichtung 50 Lambwellen zu erzeugen, Ultraschallsignale untereinander gesendet bzw. empfangen werden. Lambwellen haben die Eigenschaft, eine entsprechende Lambwellen-Platte wie beispielsweise eine Wandung 51 eines Messrohrs 52 großflächig anzuregen, was relativ zu einer Wellenlänge der Ultraschallsignale zu einer breiten Übertragung von Ultraschallsignalen in das Fluid sorgt, siehe die schematisch skizzierte Wellenfront WF. Abstrahlwinkel von durch Lambwellen im Medium erzeugten Ultraschallsignalen sind abhängig von angeregten Lambwellen-Moden. Durch Anregung verschiedener Moden kann der Abstrahlwinkel und somit eine Länge des Signalpfadabschnitts im Fluid variiert werden. Man vergleiche die obere Darstellung mit der unteren Darstellung. Es können also durch nacheinander Anregen verschiedener Lambwellen-Moden auch mit zwei Ultraschallwandlern mehrere Signalpfade mit unterschiedlichen Längen von Signalpfadabschnitten im Fluid eingerichtet werden.

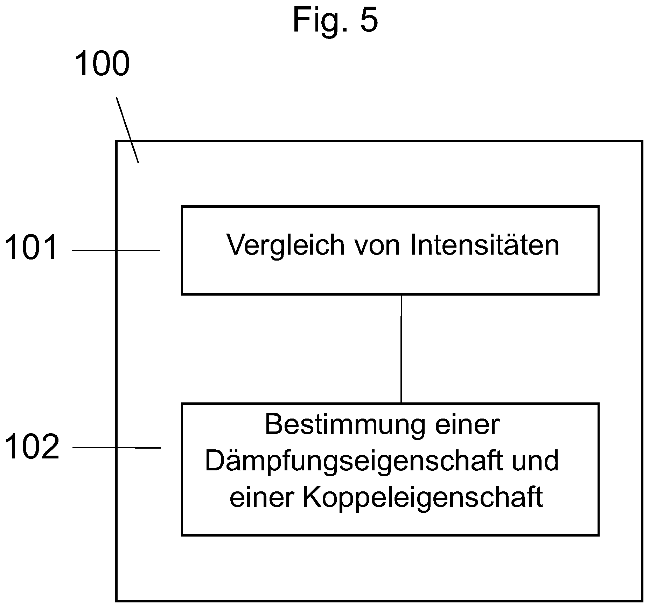

Fig. 5 skizziert den Ablauf eines erfindungsgemäßen Verfahrens 100, wobei in einem ersten Verfahrensschritt 101 die elektronische Mess-/Betriebsschaltung 40 des Ultraschall-Messgeräts Intensitäten von Ultraschallsignalen entlang von Signalpfaden mit unterschiedlich langen Signalpfadabschnitten im Fluid vergleicht und in einem zweiten Verfahrensschritt 102 daraus eine Dämpfungseigenschaft des Fluids und eine akustische Koppeleigenschaft zwischen Wandung und Fluid bestimmt wird.

In einer Ausgestaltung weist die Anordnung einen längsten Signalpfadabschnitt LS im Fluid und einen kürzesten Signalpfadabschnitt KS im Fluid auf, wobei der längste Signalpfadabschnitt und der kürzeste Signalpfadabschnitt eine Signalpfadabschnittlängendifferenz SD aufweisen, wobei ein erster Schätzwert S1 für einen Schalldämpfungskoeffizienten des Fluids sowie ein zweiter Schätzwert S2 für eine Wellenlänge des Ultraschalls im Fluids herangezogen wird, um die Signalpfadabschnittlängendifferenz einzurichten, wobei der längste Signalpfadabschnitt um wenigstens eine Anzahl A zweiter Schätzwerte größer ist als der kürzeste Signalpfadabschnitt, wobei Folgendes gilt:

$$A \geq -\ln(1-0.1)/(S1*S2),$$

und insbesondere $A \geq -\ln(1-0.3)/(S1*S2)$ mit ln als natürlichem Logarithmus.

Auf diese Weise kann ein ausreichend großer Unterschied von Längen der Signalpfadabschnitte im Fluid und somit eine ausreichende Messgenauigkeit der Dämpfungseigenschaft bzw. der akustischen Koppeleigenschaft sichergestellt werden.

In einer Ausgestaltung wird zur Bestimmung der Dämpfungseigenschaft und/oder der akustischen Koppeleigenschaft ein erster, quadratischer Zusammenhang zwischen Frequenz und Dämpfung im Fluid sowie ein zweiter, exponentieller Zusammenhang zwischen Signalpfadlänge und Dämpfung im Fluid angenommen.

In einer Ausgestaltung durchlaufen die Signalpfade das Fluid mit höchstens zwei Reflexionen, und insbesondere höchstens einer Reflexion.

Auf diese Weise kann eine störende Wechselwirkung von Ultraschallsignalen und Ultraschall in der Wandung vermieden werden.

**Bezugszeichenliste**

| | |
|---|---|
| 1 | Ultraschall-Messgerät |
| 10 | Anordnung von Ultraschallwandlern |
| 20 | Ultraschallwandler |
| 21 | Lambwellen-Vorrichtung |
| 30 | Signalpfad |
| 31 | Signalpfadabschnitt im Fluid |
| 40 | elektronische Mess-/Betriebsschaltung |

| 50 | Haltevorrichtung |
| 51 | Wandung |
| 52 | Messrohr |
| 52.1 | Außenfläche |
| 53 | Lambwellen-Platte |
| 60 | Rohrleitung |
| 70 | Behältnis |
| 100 | Verfahren |
| 101 | erster Verfahrensschritt |
| 102 | zweiter Verfahrensschritt |
| KS | kürzester Signalpfad |
| LS | längster Signalpfad |

**Patentansprüche**

1. Verfahren (100) zum Betreiben eines Ultraschall-Messgeräts (1) umfassend:

   eine Anordnung (10) von Ultraschallwandlern (20) zum Aussenden und Empfangen von Ultraschallsignalen entlang mindestens zweier Signalpfade (30) durch ein Fluid, wobei die Anordnung durch eine Haltevorrichtung (50) mit zumindest einer Wandung (51) gehalten wird, wobei die Signalpfade abschnittsweise durch mindestens eine der zumindest einen Wandung verlaufen, wobei Signalpfadabschnitte (31) mindestens zweier Signalpfade im Fluid unterschiedlich lang sind, **dadurch gekennzeichnet, dass** eine elektronische Mess-/Betriebsschaltung (40) des Ultraschall-Messgeräts in einem ersten Verfahrensschritt (101) Intensitäten von Ultraschallsignalen entlang von Signalpfaden mit unterschiedlich langen Signalpfadabschnitten im Fluid vergleicht und in einem zweiten Verfahrensschritt (102) daraus eine Dämpfungseigenschaft des Fluids und eine akustische Koppeleigenschaft zwischen Wandung und Fluid bestimmt.

2. Verfahren (100) nach Anspruch 1, wobei unterschiedliche Längen von Signalpfadabschnitten im Fluid durch unterschiedliche Abstände jeweils zweier einen Signalpfad definierenden Ultraschallwandler (20) eingerichtet sind.

3. Verfahren (100) nach Anspruch 1, wobei unterschiedliche Längen von Signalpfaden durch Anregung unterschiedlicher Moden in einer Lambwellen-Vorrichtung (21) eingerichtet werden.

4. Verfahren (100) nach einem der vorigen Ansprüche, wobei die Haltevorrichtung (50) ein Messrohr (52) ist, welches Messrohr ein durch eine Rohrleitung (60) strömendes Fluid führt, wobei die Ultraschallwandler auf einer Außenfläche (52.1) des Messrohrs angeordnet sind, oder wobei die Anordnung (10) mit der Haltevorrichtung (50) in ein beispielsweise in einem Behältnis (70) befindlichen Fluid getaucht wird.

5. Verfahren (100) nach Anspruch 4, wobei die Ultraschallwandler (20) bei Aussenden eines Ultraschallsignals Ultraschall-Lambwellen in einer dazu vorgesehenen Lambwellen-Vorrichtung (21) erzeugen, wobei die Lambwellen-Vorrichtung die Messrohrwandung (51) oder eine Lambwellenplatte (53) der Haltevorrichtung (50) ist.

6. Verfahren (100) nach einem der vorigen Ansprüche, wobei die Anordnung einen längsten Signalpfadabschnitt (LS) im Fluid und einen kürzesten Signalpfadabschnitt (KS) im Fluid aufweist, wobei der längste Signalpfadabschnitt und der kürzeste Signalpfadabschnitt eine Signalpfadabschnittlängendifferenz (SD) aufweisen, wobei ein erster Schätzwert (S1) für einen Schalldämpfungskoeffizienten des Fluids sowie ein zweiter Schätzwert (S2) für eine Wellenlänge des Ultraschalls im Fluids herangezogen wird, um die Signalpfadabschnittlängendifferenz einzurichten, wobei der längste Signalpfadabschnitt um wenigstens eine Anzahl A zweiter Schätzwerte größer ist als der kürzeste Signalpfadabschnitt, wobei Folgendes gilt:

$$A \geq -\ln(1-0.1)/(S1*S2),$$

und insbesondere $A \geq -\ln(1-0.3)/(S1*S2)$ mit ln als natürlichem Logarithmus.

7. Verfahren (100) nach einem der vorigen Ansprüche, wobei zur Bestimmung der Dämpfungseigenschaft und/oder der akustischen Koppeleigenschaft ein erster, quadratischer Zusammenhang zwischen Frequenz und Dämpfung im Fluid sowie ein zweiter, exponentieller Zusammenhang zwischen Signalpfadlänge und Dämpfung im Fluid angenommen wird.

8. Verfahren (100) nach einem der vorigen Ansprüche, wobei die Signalpfade (30) das Fluid mit höchstens zwei Reflexionen, und insbesondere höchstens einer Reflexion durchlaufen.

9. Ultraschall-Messgerät (1) eingerichtet zur Umsetzung des Verfahrens nach einem der vorigen Ansprüche umfassend:

   eine Anordnung (10) von Ultraschallwandlern (20) zum Aussenden und Empfangen von Ultraschallsignalen entlang mindestens zweier Signalpfade (30) durch ein Fluid,

wobei die Anordnung durch eine Haltevorrichtung (50) mit zumindest einer Wandung (51) gehalten ist, wobei die Signalpfade abschnittsweise durch mindestens eine der zumindest einen Wandung verlaufen, wobei Signalpfadabschnitte mindestens zweier Signalpfade im Fluid unterschiedlich lang sind,

**dadurch gekennzeichnet, dass**

eine elektronische Mess-/Betriebsschaltung (40) des Ultraschall-Messgeräts dazu eingerichtet ist, in einem ersten Verfahrensschritt (101) Intensitäten von Ultraschallsignalen entlang von Signalpfaden mit unterschiedlich langen Signalpfadabschnitten im Fluid zu vergleichen und in einem zweiten Verfahrensschritt (102) daraus eine Dämpfungseigenschaft des Fluids und eine akustische Koppeleigenschaft zwischen Wandung und Fluid zu bestimmen.

10. Ultraschall-Messgerät (1) nach Anspruch 9,

wobei die Haltevorrichtung (50) ein Messrohr (52) ist, welches Messrohr ein durch eine Rohrleitung (60) strömendes Fluid führt, wobei die Ultraschallwandler auf einer Außenfläche (52.1) des Messrohrs angeordnet sind,

oder wobei die Anordnung (10) mit der Haltevorrichtung (50) in ein beispielsweise in einem Behältnis (70) befindlichen Fluid getaucht ist.

11. Ultraschall-Messgerät (1) nach Anspruch 10,

wobei die Ultraschallwandler (20) bei Aussenden eines Ultraschallsignals Ultraschall-Lambwellen in einer dazu vorgesehenen Lambwellen-Vorrichtung (21) erzeugen,

wobei die Lambwellen-Vorrichtung die Messrohrwandung (51) oder eine Lambwellenplatte (53) der Haltevorrichtung (50) ist.

**Claims**

1. A method (100) for operating an ultrasonic measuring device (1), comprising:

An arrangement (10) of ultrasonic transducers (20) for transmitting and receiving ultrasonic signals along at least two signal paths (30) through a fluid,

wherein the arrangement is secured in position by a fixture (50) with at least one wall (51), wherein the signal paths run in sections through at least one of the one or more walls, wherein signal path sections (31) of at least two signal paths in the fluid have different lengths,

**characterized in that**

in a first process step (101), an electronic measuring/operating circuit (40) of the ultrasonic measuring device compares intensities of ultrasonic signals along signal paths with signal path sections of different lengths in the fluid, and in a second process step (102) uses these to determine an absorption property of the fluid and an acoustic coupling property between the wall and the fluid.

2. The method (100) as claimed in claim 1, wherein different lengths of signal path sections in the fluid are configured by different spacings between each of the two ultrasonic transducers (20) defining a signal path.

3. The method (100) as claimed in claim 1, wherein different lengths of signal paths are configured by initiating different modes in a Lamb wave device (21).

4. The method (100) as claimed in one of the preceding claims,

wherein the fixture (50) is a measuring tube (52), said measuring tube conducting a fluid flowing through a pipeline (60), wherein the ultrasonic transducers are arranged on an outer surface (52.1) of the measuring tube,

or wherein the arrangement (10) with the fixture (50) is immersed in a fluid, for example one located in a container (70).

5. The method (100) as claimed in claim 4,

wherein the ultrasonic transducers (20) generate ultrasonic Lamb waves in a Lamb wave device (21) intended for this purpose when transmitting an ultrasonic signal,

wherein the Lamb wave device is the measuring tube wall (51) or a Lamb wave plate (53) of the fixture (50).

6. The method (100) as claimed in one of the preceding claims,

wherein the arrangement has one longest signal path section (LS) in the fluid and one shortest signal path section (KS) in the fluid, wherein the longest signal path section and the shortest signal path section have a signal path section length difference (SD),

wherein a first estimated value (S1) for a sound absorption coefficient of the fluid and a second estimated value (S2) for a wavelength of the ultrasound in the fluid are used to configure the signal path section length difference,
wherein the longest signal path section is greater than the shortest signal path section by at least a number A of the second estimated value, wherein the following applies:

$$A \geq -\ln(1-0.1)/(S1*S2),$$

and in particular $A \geq -\ln(1-0.3)/(S1*S2)$,
with ln as the natural logarithm.

7. The method (100) as claimed in one of the preceding claims,
wherein a first, square relation between frequency and absorption in the fluid and a second, exponential relation between signal path length and absorption in the fluid are assumed to determine the absorption property and/or the acoustic coupling property.

8. The method (100) as claimed in one of the preceding claims,
wherein the signal paths (30) pass through the fluid with at most two reflections, and in particular at most one reflection.

9. An ultrasonic measuring device (1) configured to carry out the method as claimed in one of the preceding claims, comprising:

An arrangement (10) of ultrasonic transducers (20) for transmitting and receiving ultrasonic signals along at least two signal paths (30) through a fluid,
wherein the arrangement is secured in position by a fixture (50) with at least one wall (51), wherein the signal paths run in sections through at least one of the one or more walls, wherein signal path sections of at least two signal paths in the fluid have different lengths,
**characterized in that**
in a first process step (101), an electronic measuring/operating circuit (40) of the ultrasonic measuring device is configured to compare intensities of ultrasonic signals along signal paths with signal path sections of different lengths in the fluid, and in a second process step (102) to use these to determine an absorption property of the fluid and an acoustic coupling property between the wall and the fluid.

10. The ultrasonic measuring device (1) as claimed in claim 9,

wherein the fixture (50) is a measuring tube (52), said measuring tube conducting a fluid flowing through a pipeline (60), wherein the ultrasonic transducers are arranged on an outer surface (52.1) of the measuring tube,
or wherein the arrangement (10) with the fixture (50) is immersed in a fluid, for example one located in a container (70).

11. The ultrasonic measuring device (1) as claimed in claim 10,

wherein the ultrasonic transducers (20) generate ultrasonic Lamb waves in a Lamb wave device (21) intended for this purpose when transmitting an ultrasonic signal,
wherein the Lamb wave device is the measuring tube wall (51) or a Lamb wave plate (53) of the fixture (50).

**Revendications**

1. Procédé (100) destiné à faire fonctionner un appareil de mesure à ultrasons (1), lequel procédé comprend :

un agencement (10) de convertisseurs à ultrasons (20) destiné à émettre et à recevoir des signaux ultrasonores le long d'au moins deux trajets de signal (30) à travers un fluide,
l'agencement étant maintenu par un dispositif de maintien (50) comportant au moins une paroi (51), les trajets de signal s'étendant par sections à travers au moins l'une des au moins une paroi, les sections de trajet de signal (31) d'au moins deux trajets de signal dans le fluide présentant des longueurs différentes,
**caractérisé en ce que**
un circuit électronique de mesure/fonctionnement (40) de l'appareil de mesure à ultrasons est conçu pour, dans une première étape du procédé (101), comparer les intensités des signaux ultrasonores le long de trajets de signal comportant des sections de trajet de signal de longueurs différentes dans le fluide et, dans une deuxième étape du procédé (102), déterminer à partir de la comparaison de la première étape une propriété d'amortissement du fluide et une propriété de couplage acoustique entre la paroi et le fluide.

2. Procédé (100) selon la revendication 1,
pour lequel différentes longueurs de sections de trajet de signal dans le fluide sont établies par différentes distances entre deux convertisseurs à ultrasons (20) définissant respectivement un trajet de signal.

3. Procédé (100) selon la revendication 1,
pour lequel différentes longueurs de trajet de signal sont établies par l'excitation de différents modes dans un dispositif à ondes de Lamb (21).

**4.** Procédé (100) selon l'une des revendications précédentes,

pour lequel le dispositif de maintien (50) est un tube de mesure (52), lequel tube de mesure conduit un fluide s'écoulant à travers une conduite (60), les convertisseurs à ultrasons étant disposés sur une surface extérieure (52.1) du tube de mesure, ou
pour lequel l'agencement (10) avec le dispositif de maintien (50) est immergé dans un fluide se trouvant par exemple dans un réservoir (70).

**5.** Procédé (100) selon la revendication 4,

pour lequel les convertisseurs à ultrasons (20), lors de l'émission d'un signal ultrasonore, génèrent des ondes de Lamb ultrasonores dans un dispositif à ondes de Lamb (21) prévu à cet effet, le dispositif à ondes de Lamb étant la paroi de tube de mesure (51) ou une plaque à ondes de Lamb (53) du dispositif de maintien (50).

**6.** Procédé (100) selon l'une des revendications précédentes,

pour lequel l'agencement comprend une section de trajet de signal la plus longue (LS) dans le fluide et une section de trajet de signal la plus courte (KS) dans le fluide, la section de trajet de signal la plus longue et la section de trajet de signal la plus courte présentant une différence de longueur de section de trajet de signal (SD), pour lequel une première valeur estimée (S1) pour un coefficient d'amortissement acoustique du fluide et une deuxième valeur estimée (S2) pour une longueur d'onde des ultrasons dans le fluide sont utilisées pour établir la différence de longueur de trajet de signal, la section de trajet de signal la plus longue étant supérieure d'au moins un nombre A de deuxièmes valeurs estimées à la section de trajet de signal la plus courte, où :

$$A \geq -\ln(1-0.1)/(S1*S2),$$

et notamment $A \geq -\ln(1-0.3)/(S1*S2)$
avec ln comme logarithme naturel.

**7.** Procédé (100) selon l'une des revendications précédentes,
pour lequel, pour déterminer la propriété d'amortissement et/ou la propriété de couplage acoustique, on suppose une première relation quadratique entre la fréquence et l'amortissement dans le fluide ainsi qu'une deuxième relation exponentielle entre la longueur du trajet du signal et l'amortissement dans le fluide.

**8.** Procédé (100) selon l'une des revendications précédentes,
pour lequel les trajets de signal (30) traversent le fluide avec au maximum deux réflexions, et notamment au maximum une réflexion.

**9.** Appareil de mesure à ultrasons (1) conçu pour mettre en œuvre le procédé selon l'une des revendications précédentes, lequel appareil comprend :

un agencement (10) de convertisseurs à ultrasons (20) destiné à émettre et à recevoir des signaux ultrasonores le long d'au moins deux trajets de signal (30) à travers un fluide, l'agencement étant maintenu par un dispositif de maintien (50) comportant au moins une paroi (51), les trajets de signal s'étendant par sections à travers au moins l'une des au moins une paroi, les sections de trajet de signal d'au moins deux trajets de signal dans le fluide présentant des longueurs différentes,
**caractérisé en ce que**
un circuit électronique de mesure/fonctionnement (40) de l'appareil de mesure à ultrasons est conçu pour, dans une première étape du procédé (101), comparer les intensités des signaux ultrasonores le long de trajets de signal comportant des sections de trajet de signal de longueurs différentes dans le fluide et, dans une deuxième étape du procédé (102), déterminer à partir de la comparaison de la première étape une propriété d'amortissement du fluide et une propriété de couplage acoustique entre la paroi et le fluide.

**10.** Appareil de mesure à ultrasons (1) selon la revendication 9,

pour lequel le dispositif de maintien (50) est un tube de mesure (52), lequel tube de mesure guide un fluide s'écoulant à travers une conduite (60), les convertisseurs à ultrasons étant disposés sur une surface extérieure (52.1) du tube de mesure, ou
pour lequel l'agencement (10) avec le dispositif de maintien (50) est immergé dans un fluide se trouvant par exemple dans un réservoir (70).

**11.** Appareil de mesure à ultrasons (1) selon la revendication 10,

pour lequel les convertisseurs à ultrasons (20), lors de l'émission d'un signal ultrasonore, génè-

**EP 4 405 642 B1**

rent des ondes de Lamb ultrasonores dans un dispositif à ondes de Lamb (21) prévu à cet effet, le dispositif à ondes de Lamb étant la paroi de tube de mesure (51) ou une plaque à ondes de Lamb (53) du dispositif de maintien (50).

Fig. 1

Fig. 2

Fig. 3

50 / 52

LS

KS

20

10

50 / 52

KS

20

20

LS

KS

10

Fig. 4

20

WF

50 / 52

31

20

20

WF

50 / 52

31

20

## Fig. 5

100

101 — Vergleich von Intensitäten

102 — Bestimmung einer Dämpfungseigenschaft und einer Koppeleigenschaft

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018133066 A1
- US 2006052963 A1